# FASCICULE DE BREVET EUROPEEN

(11) **EP 0 553 216 B1**
(45) Date de publication et mention de la délivrance du brevet: **14.12.1994**
(21) Numéro de dépôt: 91919204.7
(22) Date de dépôt: 03.10.1991
(51) Int. Cl.: C21C 1/04, C22B 9/04

(54) **PROCEDE D'EXTRACTION DU ZINC PRESENT DANS LA FONTE LIQUIDE ET MOYENS EN VUE DE LA MISE EN OEUVRE DU PROCEDE**
VERFAHREN UND VORRICHTUNG ZUM ENTFERNEN VON ZINK AUS GUSSEISEN
METHOD FOR EXTRACTING ZINC PRESENT IN LIQUID CAST IRON, AND MEANS FOR IMPLEMENTING SUCH METHOD

(30) Priorité: 09.10.1990 FR 9012651
(43) Date de publication de la demande: 04.08.1993
(73) Titulaire: ECOLE CENTRALE DE LILLE, F-59651 Villeneuve-d'Ascq Cédex (FR); TISSIER, Jean Charles, F-59273 Fretin (FR); PERROT, Pierre, F-59052 Roubaix Cédex 1 (FR); DAUPHIN, Jean Yves, F-59273 Fretin (FR)
(72) Inventeur: TISSIER, Jean Charles, F-59273 Fretin (FR); PERROT, Pierre, F-59052 Roubaix Cédex 1 (FR); DAUPHIN, Jean Yves, F-59273 Fretin (FR)
(74) Mandataire: Ecrepont, Robert Pierre
(86) Numéro de dépôt international: FR9100776
(87) Numéro de publication internationale: WO9206222

(56) Documents cités:
- CA-A- 1 251 328
- GB-A- 2 021 155

## Description

L'invention se rapporte à un procédé d'extraction du zinc présent dans la fonte liquide.

L'invention concerne également une installation comprenant les moyens pour la mise en oeuvre du procédé précité.

Plus particulièrement mais non exclusivement, l'invention concerne un procédé applicable en milieu industriel et spécialement dans un atelier de fonderie.

Précisément mais non limitativement, l'invention concerne l'élimination du zinc dans de la fonte issue d'une fusion de matériau ferreux de récupération.

La généralisation du processus de galvanisation des aciers en vue de leur protection contre la corrosion a en effet pour conséquence la présence de plus en plus fréquente de zinc dans les ferrailles de récupération.

Ce zinc qui se retrouve dans la fonte produite à partir de ferrailles du type précité présente des inconvénients dont celui d'inhiber l'action du magnésium utilisé pour assurer dans la dite fonte la formation de graphite sphéroïdal ("Effets du zinc introduit dans les charges en fonderie de fonte" - S.PARENT-SIMONIN - FONDEUR D'AUJOURD'HUI N° 62 - 1987).

On sait que la quantité de zinc susceptible de se retrouver en solution dans la fonte liquide ne peut pas, physiquement, dépasser une certaine valeur qui est fonction de la température, de la pression et de la composition de la fonte.

On admet que la teneur maximale en zinc d'une fonte classique (fer liquide saturé en carbone) sous une pression d'air égale à la pression atmosphérique normale de 1 bar est de 2,2 % à 1200°C, 1,6 % à 1300°C, 1,2 % à 1400°C et 0,9 % à 1500°C.

Dans la pratique, les teneurs recontrées ne sont pas aussi élevées que les teneurs maximales qui viennent d'être données.

Elles sont en général de l'ordre de 0,2 % et n'excédent que rarement, du moins en 1990, la valeur de 0,4 %.

Il s'avère que même présent dans la fonte à une teneur de 0,1 % soit 1000 ppm, le zinc reste gênant.

Les techniques actuellement proposées pour éliminer le zinc consistent, avant fusion, soit à traiter les ferrailles à une température supérieure à 910°C afin d'atteindre la température d'ébullition du zinc afin de volatiliser celui-ci, soit à traiter chimiquement les déchets et poussières par un agent réduction puis à récupérer le zinc.

La technique selon l'invention a pour but d'éliminer le zinc non pas dans la ferraille mais dans la fonte liquide, le traitement correspondant pouvant être effectué soit pendant que la fonte liquide est maintenue en température dans un four à induction, soit dans une poche située entre la sortie du four et le poste de coulée de la fonte.

Classiquement, la température de la fonte liquide se situe dans l'intervalle 1100-1600°C.

Il s'agit bien sûr de valeurs extrêmes, car dans la pratique, on évite de descendre au dessous de 1300°C et également de chauffer au dessus de 1500°C.

Une température moyenne de 1400°C constitue un bon compromis entre les différentes contraintes.

La fraction de zinc dissous dans cette fonte liquide dépassant la teneur maximale s'évapore naturellement progressivement et ce d'autant plus rapidement que sa concentration initiale était élevée.

C'est donc la partie non négligeable de zinc qui reste naturellement en solution dans la fonte liquide et, de ce fait, dit "zinc résiduel" que l'invention a pour but sinon d'éliminer totalement au moins d'en abaisser la concentration dans le bain.

En vue d'extraire le zinc de la fonte, il est connu (CA-A-1.251.328) :
- dans un premier temps, la fonte étant contenue dans un récipient, de confiner de manière étanche le volume de fluide gazeux situé au dessus du bain de fonte,
- dans un second temps, d'imposer dans l'atmosphère confiné, un vide partiel de niveau variable de façon contrôlée.

Ce procédé a ses avantages mais engendre des projections de fonte qui ne sont pas compatibles avec sa mise en oeuvre dans une installation industrielle de coulée de pièces en atelier.

En effet, les projections de fonte sont fortement dégradantes.

Egalement, il est connu (patent abstract of Japon, vol.8 N° 3 (C.203) (1440), 07.01.1984 et JP-A-58171519) de substituer au vide partiel un vide extrêmement poussé (10⁻¹ à 10⁻⁴ millimètres de mercure) ce qui ne fait qu'accentuer voire impliquer le phénomène d'ébullition signalé et ses nombreux inconvénients).

A cet effet, l'invention a pour objet un procédé selon lequel, avant le poste de coulée de la fonte, en vue du piégeage du zinc :
- dans un premier temps, la fonte étant contenue dans un récipient, on confine de manière étanche le volume gazeux situé au dessus du bain de fonte,
- dans un second temps, on impose dans l'atmosphère confinée un vide partiel de niveau variable de façon contrôlée.

Ce procédé étant caractérisé en ce qu'on ajuste constamment le niveau de vide à une valeur prédéterminée en fonction de l'évolution dans le temps de la pression de vapeur saturante du zinc en solution dans la fonte à la température du bain, cette valeur prédéterminée étant au moins légèrement supérieure à cette pression de vapeur saturante.

L'invention a également pour objet l'installation selon la revendication 7 comprenant les moyens en vue de la mise en oeuvre du procédé.

Des modes de réalisation préférés de l'invention font l'objet des revendications 2 à 6, 8 et 9.

Cette invention sera bien comprise à l'aide de la description ci-aprés faite à titre d'exemple non limitatif en regard du dessin ci-annexé qui représente schématiquement :
- figure 1 : une installation pour la mise en oeuvre de l'invention,
- figure 2 : une variante de réalisation d'une installation pour la mise en oeuvre de l'invention,
- figure 3 : un graphique représentant l'évolution de la concentration du zinc en fonction du temps.

En se reportant au dessin, on voit une installation 1 de fusion de fonte 2 et/ou de maintien à température d'un bain de fonte contenu dans un récipient 3 tel un creuset comprenant à sa partie supérieure 4 une ouverture 5 de chargement et/ou de coulée de la charge en fusion.

Tel qu'on peut le concevoir, au moins entre le plan de l'ouverture 4 du creuset et le plan qui constitue la surface libre 6 du bain, s'étend un volume 7 occupé par un fluide gazeux et donc dans lequel volume règne une atmosphère gazeuse qui communique au bain une certaine pression via sa surface libre supérieure.

Tel que cela est connu, la propension d'une substance à s'évaporer d'un milieu liquide dans lequel elle se trouve en solution à une température donnée dépend de la pression de vapeur saturante (tension de vapeur) de cette substance à la température considérée.

De même, on sait que la température d'ébullition d'un liquide sous une pression donnée est égale à la température pour laquelle sa tension de vapeur est égale à la pression considérée.

De ce fait si, à température constante, on abaisse la pression de l'atmosphère qui règne au dessus du bain de fonte chargée de zinc, en premier lieu, on tend à induire l'évaporation du zinc.

L'invention exploite ce phénomène en remédiant aux inconvénients qui se produiraient si la pression de l'atmosphère située au dessus du bain était incontrôlée.

En effet, l'abaissement excessif de la pression gazeuse exercée à la surface supérieure du bain induirait la brusque vaporisation du zinc, ce qui provoquerait de violentes projections de fonte liquide.

Compte tenu de la température de la fonte liquide, il est donc souhaitable de modérer l'évaporation du zinc.

A cet effet, avant l'utilisation du bain pour la coulée de pièces, en vue du piégeage du zinc :
- dans un premier temps, on confine de manière étanche le volume gazeux 7 situé dans le récipient 3 au dessus du bain de fonte 2,
- dans un second temps, on impose dans l'atmosphère confinée un vide partiel de niveau variable de façon contrôlée.

De manière remarquable, on ajuste constamment le niveau de vide à une valeur prédéterminée en fonction de l'évolution dans le temps de la pression de vapeur saturante du zinc en solution dans la fonte à la température du bain, cette valeur prédéterminée étant au moins légèrement supérieure à cette pression de vapeur saturante.

Afin d'imposer le vide partiel :
- on extrait de manière contrôlée le fluide gazeux qui constitue l'atmosphère confinée et ce, de manière à, en un temps prédéterminé, abaisser progressivement la pression de l'atmosphère confinée jusqu'à une valeur également prédéterminée mais supérieure à la pression de vapeur saturante du zinc en solution dans la fonte à la température du bain puis,
- on maintient cette pression pendant un temps prédéterminé.

Notamment, lorsque le piégeage du zinc s'opère loin de la surface supérieure du bain, on s'assure que les vapeurs de zinc ne puissent se condenser au dessus du bain puis retomber dans celui-ci.

Conformément à l'invention, afin de s'assurer que les vapeurs de zinc ne puissent se condenser au dessus du bain, on les extrait de l'atmosphère confinée au dessus du dit bain en suspension dans du fluide gazeux qui constitue la dite atmosphère et, pendant le transport du fluide gazeux, on réchauffe celui-ci afin d'éviter la condensation de vapeurs de zinc.

Pour le piégeage proprement dit dans une première forme de réalisation, au loin du bain, on traite le fluide gazeux extrait du récipient de manière à en condenser les vapeurs de zinc.

Dans une variante de réalisation, on oxyde le zinc et à cet effet cependant qu'on extrait le fluide gazeux qui constitue l'atmosphère confinée, on injecte dans le récipient, sensiblement au droit de la surface du bain de fonte, un fluide gazeux oxydant et ce, de manière à engendrer la dite oxydation du zinc dès la sortie des vapeurs du dit bain.

Ensuite, pour l'extraction de l'oxyde de zinc, on procède à un décrassage.

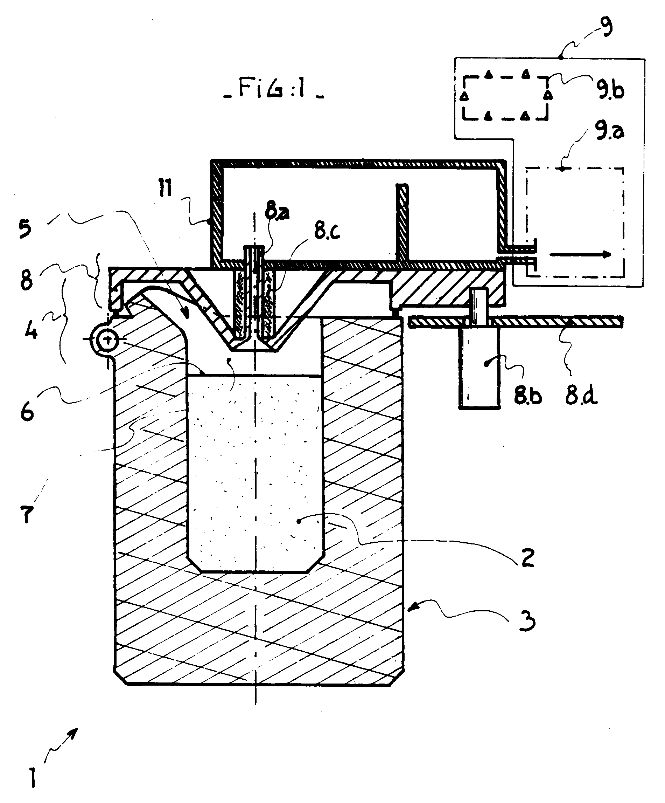

Outre, un moyen 8 de confinement du volume gazeux situé dans le récipient, au dessus du bain, et un moyen 9 pour imposer dans l'atmosphère un niveau de vide partiel variable de façon contrôlée, par le biais d'un moyen 9a d'extraction du fluide gazeux présent dans le volume confiné, les moyens pour la mise en oeuvre de l'invention comprennent principalement (figure 1) :
- un moyen 9b de commande du dit moyen 9a d'extraction pour l'ajustement du niveau du vide à une valeur prédéterminée en fonction de l'évolution dans le temps de la pression de vapeur saturante du zinc en solution dans la fonte à la température du bain, cette valeur prédéterminée étant au moins légèrement supérieure à cette pression de vapeur saturante et,
- des moyens 11, 12 de piégeage du zinc.

Le moyen 8 de confinement comprend essentiellement un couvercle ajusté de manière étanche sur l'ouverture du récipient.

Le moyen 9a d'extraction du fluide consiste, par exemple, en une pompe à vide raccordée à un orifice ménagé dans le couvercle.

Le moyen 9b de commande du moyen d'extraction selon la loi prédéterminée consiste, par exemple, quant à lui en un automate programmable.

Le moyen 11, 12 en vue de piéger le zinc comprend un moyen 8a en vue d'entraver la condensation des vapeurs de zinc au dessus du bain de fonte tel un canal 8a prélevant le fluide gazeux du dessus du bain et ménagé dans le couvercle 8, lequel canal 8a est doté d'un moyen de chauffage 8c en vue d'entraver la condensation de zinc à son niveau.

De préférence, le couvercle 8 est conformé de manière telle que le canal 8a débouche à quelques centimètres de la surface libre du bain.

Avantageusement, le couvercle 8 est supporté par un vérin 8b quant à lui porté par un bâti 8d, lequel vérin lors de l'ouverture permet de soulever le couvercle puis de l'effacer latéralement au récipient et vice versa lors de la fermeture.

Pour le piégeage proprement dit, le moyen 11, 12 de piégeage consiste dans une première forme 11 de réalisation en un moyen de condensation des vapeurs de zinc écartées du dessus du bain.

Par exemple, ce moyen 11 de condensation consiste en des anneaux de RASCHIG refroidis à l'eau.

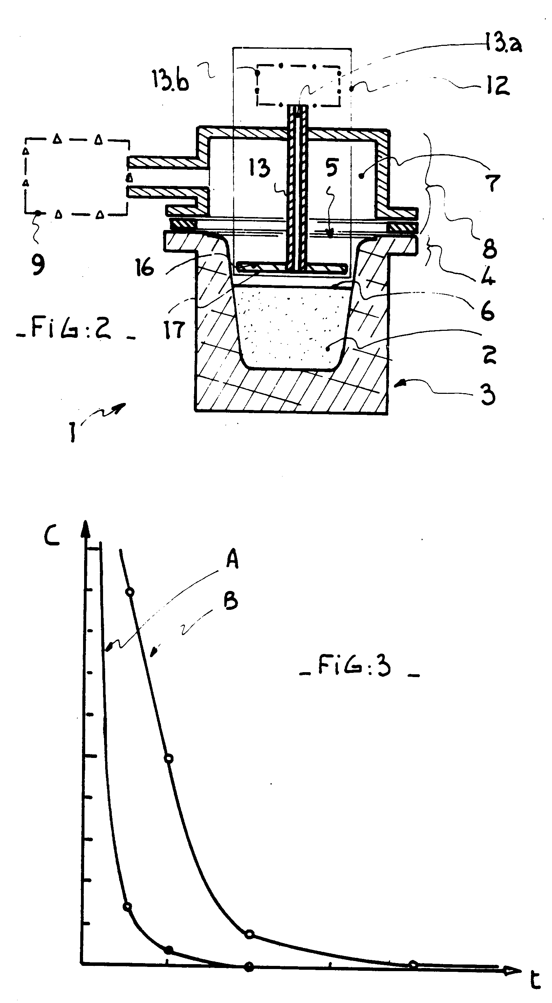

Dans une variante de réalisation (figure 2), le moyen 11, 12 de piégeage consiste en un moyen 12 d'oxydation du zinc tel un moyen d'introduction contrôlée d'un fluide gazeux oxydant au droit de la surface 6 du bain de fonte.

L'entrée de fluide gazeux oxydant tel de l'air dans le volume confiné est alors elle-même régulée et prise en compte pour déterminer le vide partiel.

Dans cette variante, le moyen 12 en vue d'engendrer la condensation des vapeurs de zinc au dessus du bain comprend, d'une part, un plateau 16 rigide doté d'une surface 17 sensiblement plane d'étendue approximativement égale à celle de la surface du bain et, d'autre part, un organe 13 de maintien du dit plateau tant à faible distance au dessus de la surface du bain qu'à une température supérieure à celle de vaporisation du zinc sous la pression contrôlée.

Dans une forme préférée de réalisation, d'une part, le fluide gazeux est injecté à travers le plateau 16 vers la surface du bain par un moyen 13b à cet effet via un conduit 13a, lequel conduit est de préférence constitué par l'organe 13 de maintien de plateau rigide à la distance requise et, d'autre part, le plateau rigide consiste en un disque de matériau réfractaire.

Sur la figure 3, la courbe A traduit la cinétique d'élimination du zinc à 1380°C sous 120 millibars (12 KILOPASCALS) tandis que la courbe B de la même figure traduit la cinétique d'élimination du zinc à 1380°C sous 500 millibars (50 KILOPASCALS).

Sur la figure 3, le temps t est représenté en abscisse tandis que les concentrations C sont portées en ordonnée.

Le temps zéro est l'instant auquel la pression de travail est atteinte dans l'enceinte de confinement.

A titre d'exemple, pour une masse de bain de 50 grammes, aprés le maintien d'une pression de 12 KILOPASCALS pendant 16 secondes, on obtient un rapport de masse de zinc sur masse totale de 0,014 % (et de 0,004 % pour un temps de 30 secondes de maintien).

Sous une pression de 50 KILOPASCALS, le rapport de masse en % n'est que de 0,051 aprés un temps de maintien de 30 secondes.

Le procédé de l'invention doit permettre d'abaisser la concentration de zinc en dessous du ppm.

En pratique, les analyses montrent qu'on descend facilement en dessous du seuil de détection des spectomètres à étincelles couramment utilisés, soit 10 ppm alors que, d'un point de vue métallurgique, une teneur résiduelle de 50 ppm semble déjà représenter une limite tout à fait acceptable.

## Revendications

1. Procédé d'extraction du zinc en solution dans un bain de fonte liquide (2) contenue dans un récipient (3), tel un creuset en vue de la coulée de pièces de fonderie,
lequel récipient comprend en outre, au dessus de la surface libre (6) du bain de fonte qui est à température déterminée, un volume de fluide gazeux (7) qui communique au dit bain, via la surface libre précitée, une pression également déterminée et notamment la pression atmosphérique, le zinc en solution ayant quant à lui à cette température une certaine tension de vapeur,
selon lequel procédé, en vue de permettre le piégeage du zinc, avant l'utilisation du bain pour la coulée de pièces :
- dans un premier temps, on confine de manière étanche le volume gazeux (7) situé dans le récipient (3) au dessus du bain de fonte (2),
- dans un second temps, on impose dans l'atmosphère confinée un vide partiel de niveau variable de façon contrôlée,
ce procédé étant **CARACTERISE** en ce qu'on ajuste constamment le niveau de vide à une valeur prédéterminée en fonction de l'évolution dans le temps de la pression de vapeur saturante du zinc en solution dans la fonte à la température du bain, cette valeur prédéterminée étant au moins légèrement supérieure à cette pression de vapeur saturante.

2. Procédé selon la revendication 1 **caractérisé** en ce qu'afin d'imposer un vide partiel :
- on extrait de manière contrôlée le fluide gazeux qui constitue l'atmosphère confinée et ce, de manière à, en un temps prédéterminé, abaisser progressivement la pression de l'atmosphère confinée jusqu'à une valeur également prédéterminée mais supérieure à la pression de vapeur saturante du zinc en solution dans la fonte à la température du bain puis,
- on maintient cette pression pendant un temps prédéterminé.

3. Procédé selon l'une quelconque des revendications 1 et 2 **caractérisé** en ce que, lorsque le piégeage du zinc s'opère loin de la surface supérieure du bain, on s'assure que les vapeurs de zinc ne puissent se condenser au dessus du bain puis retomber dans celui-ci.

4. Procédé selon la revendication 3 **caractérisé** en ce qu'afin de s'assurer que les vapeurs de zinc ne puissent se condenser au dessus du bain, on les extrait de l'atmosphère confinée au dessus du dit bain en suspension dans du fluide gazeux qui constitue la dite atmosphère et ce, pendant le transport du fluide gazeux, on réchauffe celui-ci afin d'éviter la condensation de vapeurs de zinc.

5. Procédé selon l'une quelconque des revendications 1 à 4 **caractérisé** en ce qu'afin de piéger le zinc, au loin du bain, on traite le fluide gazeux extrait du récipient de manière à en condenser les vapeurs de zinc.

6. Procédé selon l'une quelconque des revendications 1 à 4 **caractérisé** en ce que cependant qu'on extrait le fluide gazeux qui constitue l'atmosphère confinée, on injecte dans le récipient, sensiblement au droit de la surface du bain de fonte, un fluide gazeux oxydant et ce, de manière à engendrer l'oxydation du zinc dès la sortie des vapeurs du dit bain.

7. Installation comprenant des moyens en vue de la mise en oeuvre du procédé selon l'une quelconque des revendications 1 à 6 et notamment des moyens (8) de confinement et de piégeage (11, 12) de zinc, un moyen (9) pour imposer dans l'atmosphère confinée un vide partiel de niveau variable de façon contrôlée par le biais d'un moyen (9a) d'extraction du fluide gazeux présent dans le volume confiné,
cette installation étant **caractérisée** en ce qu'elle comprend un moyen (9b) de commande du moyen (9a) d'extraction pour l'ajustement du niveau de vide à une valeur prédéterminée en fonction de l'évolution dans le temps de la pression de vapeur saturante du zinc en solution dans la fonte à la température du bain, cette valeur prédéterminée étant au moins légèrement supérieure à cette pression de vapeur saturante.

8. Installation comprenant des moyens selon la revendication 7 et notamment un moyen (11, 12) de piégeage du zinc extrait du bain **caractérisée** en ce que le moyen (12) de piégeage consiste en un moyen d'oxydation du zinc au droit de la surface (6) du bain de fonte.

9. Installation selon la revendication 8 **caractérisée** en ce que le moyen (11, 12) de piégeage comprend :
- un plateau (16) rigide doté d'une surface (17) sensiblement plane d'étendue approximativement égale à celle de la surface du bain,
- un organe (13) de maintien du dit plateau tant à faible distance au dessus de la surface du bain qu'à une température supérieure à celle de vaporisation du zinc sous la pression contrôlée,
- un conduit (13a) de guidage d'un fluide gazeux oxydant, lequel conduit débouche à travers le plateau (16) au droit de la surface (6) du bain,
- un moyen (13b) d'injection du fluide gazeux dans le conduit (13a) précité.

## Claims

1. Process for the extraction of zinc that is in solution in a bath of liquid iron (2) which is contained in a receiving vessel (3), such as a crucible, with a view to the pouring of castings,
said receiving vessel further including a volume of gaseous fluid (7) above the free surface (6) of the bath of liquid iron, which is at a defined temperature, said gaseous fluid communicating a pressure to said bath via the abovementioned free surface, this pressure also being defined and, in particular, being the atmospheric pressure, the zinc that is in solution having a certain vapour pressure of its own at that temperature,
according to which process, with a view to making it possible to trap the zinc before use of the bath for the pouring of castings:
- in a first step, the gas-filled volume (7) present in the receiving vessel (3), above the bath of liquid iron (2), is confined in a manner such that it is sealingly excluded from communication with the external atmosphere, and
- in a second step, a partial vacuum is imposed in the atmosphere that has been confined, it being possible to vary the level of this partial vacuum in a controlled manner,
this process being characterized in that the level of the vacuum is continuously adjusted to a value which is predetermined as a function of the progressive variation, with time, of the saturation vapour pressure of the zinc that is in solution in the liquid iron at the temperature of the bath, this predetermined value being at least slightly higher than this saturation vapour pressure.

2. Process according to Claim 1, characterized in that, in order to impose a partial vacuum:
- the gaseous fluid forming the confined atmosphere is extracted in a controlled manner and so as to bring about a progressive reduction in the pressure of said confined atmosphere during a predetermined period of time, to a value which has also been predetermined but is higher than the saturation vapour pressure of the zinc that is in solution in the liquid iron at the temperature of the bath, and
- this pressure is then maintained for a predetermined period of time.

3. Process according to Claim 1 or Claim 2, characterized in that when the trapping of the zinc occurs at a substantial distance from the upper surface of the bath, measures are taken to ensure that the zinc fumes cannot condense above the bath and then fall back into it.

4. Process according to Claim 3, characterized in that, in order to ensure that the zinc fumes cannot condense above the bath, they are extracted from the confined atmosphere above said bath, in suspension in some of the gaseous fluid forming said atmosphere, and that while the gaseous fluid is being transported, it is reheated in order to avoid the condensation of zinc fumes.

5. Process according to any one of Claims 1 to 4, characterized in that, in order to trap the zinc at a substantial distance from the bath, the gaseous fluid extracted from the receiving vessel is treated so as to condense the zinc fumes that it contains.

6. Process according to any one of Claims 1 to 4, characterized in that while the gaseous fluid forming the confined atmosphere is extracted, an oxidizing gaseous fluid is injected into the receiving vessel at approximately right-angles to the surface of the bath of liquid iron and so as to bring about oxidation of the zinc as soon as the fumes emerge from said bath.

7. Installation comprising means that are designed with a view to carrying out the process according to any one of Claims 1 to 6 and, in particular, comprising means (8) of confinement and zinc trapping (11, 12), a means (9) of imposing a partial vacuum in the confined atmosphere, it being possible to vary the level of this partial vacuum in a controlled manner, through the agency of a means (9a) of extracting some of the gaseous fluid present in the confined volume,
this installation being characterized in that it comprises a means (9b) of controlling the means (9a) of extraction which serves to adjust the level of the vacuum to a value which is predetermined as a function of the progressive variation, with time, of the saturation vapour pressure of the zinc that is in solution in the liquid iron at the temperature of the bath, this predetermined value being at least slightly higher than this saturation vapour pressure.

8. Installation comprising means according to Claim 7 and, in particular, comprising a means (11, 12) of trapping the zinc that is extracted from the bath, characterized in that the trapping means (12) consists of a zinc oxidation means which is disposed at a right-angle to the surface (6) of the bath of liquid iron.

9. Installation according to Claim 8, characterized in that the trapping means (11, 12) comprises:
- a rigid plate (16) which is provided with a substantially plane surface (17), of a size approximately equal to that of the surface of the bath,
- a device (13) for keeping said plate both at a slight distance above the surface of the bath and at a temperature higher than the vaporization temperature of zinc under the controlled pressure,
- a duct (13a) for directing an oxidizing gaseous fluid, said duct issuing through the plate (16) at right-angles to the surface (6) of the bath, and
- a means (13b) of injecting gaseous fluid into the abovementioned duct (13a).

## Patentansprüche

1. Verfahren zum Entfernen von gelöstem Zink in einem in einem Gefäß (3), beispielsweise einem Tiegel, enthaltenen Bad aus Eisengußschmelze (2) zum Gießen von Gußteilen,
wobei das Gefäß außerdem über der freiliegenden Oberfläche (6) der Eisengußschmelze, die eine vorgegebene Temperatur aufweist, einen Raum für ein gasförmiges Medium (7) aufweist, der mit der Schmelze über die freiliegende Oberfläche in Verbindung steht, wobei ebenfalls ein Druck, insbesondere der atmosphärische Druck, vorgegeben ist, und wobei das gelöste Zink seinerseits bei dieser Temperatur eine gewisse Dampfspannung besitzt,
bei welchem Verfahren zur Ermöglichung des Auffangens des Zinks vor Einsatz der Schmelze zum Gießen von Gußteilen:
- in einem ersten Schritt der sich über der Eisengußschmelze (2) im Gefäß (3) befindende Gasraum dicht eingeschlossen wird, und
- in einem zweiten Schritt in der so eingeschlossenen Atmosphäre ein Teilvakuum aufgebaut wird, dessen Höhe regelbar veränderlich ist,
**dadurch GEKENNZEICHNET**, daß die Höhe des Vakuums auf einen in Abhängigkeit von der Entwicklung des Sättigungsdampfdrucks des gelösten Zinks im Gußeisen über die Zeit abhängigen vorgegebenen Wert auf die Temperatur der Schmelze eingestellt wird, wobei dieser vorgegebene Wert zumindest geringfügig über diesem Sättigungsdampfdruck liegt.

2. Verfahren nach Anspruch 1, **dadurch gekennzeichnet**, daß zum Aufbauen eines Teilvakuums:
- das flüssige Medium, das die eingeschlossene Atmosphäre bildet, gesteuert in der Weise abgeschieden wird, daß zu einem vorgegebenen Zeitpunkt der Druck der eingeschlossenen Atmosphäre allmählich bis auf einen ebenfalls vorgegebenen Wert abgesenkt wird, der allerdings größer ist als der Wert des Sättigungsdampfdrucks des gelösten Zinks in der Schmelze bei Schmelzentemperatur, und anschließend
- dieser Druck über einen vorgegebenen Zeitraum aufrechterhalten wird.

3. Verfahren nach Anspruch 1 oder 2, **dadurch gekennzeichnet**, daß während des Auffangens des Zinks, das in Entfernung zur Oberfläche der Schmelze stattfindet, gewährleistet ist, daß die Zinkdämpfe nicht über der Schmelze kondensieren und anschließend wieder in diese zurückfallen können.

4. Verfahren nach Anspruch 3, **dadurch gekennzeichnet**, daß die Zinkdämpfe aus der über der Schmelze eingeschlossenen Atmosphäre in Suspension in einem gasförmigen Medium, das diese bildet, abgeschieden werden, um sicherzustellen, daß diese nicht über der Schmelze kondensieren können, und daß während der Weiterleitung des gasförmigen Mediums dieses wieder erwärmt wird, um eine Kondensierung der Zinkdämpfe zu vermeiden.

5. Verfahren nach einem der Ansprüche 1 bis 4, **dadurch gekennzeichnet**, daß zum Auffangen des Zinks in Entfernung zur Schmelze das aus dem Gefäß abgeschiedene gasförmige Medium in der Weise behandelt wird, daß die Zinkdämpfe kondensiert werden.

6. Verfahren nach einem der Ansprüche 1 bis 4, **dadurch gekennzeichnet**, daß das die eingeschlossene Atmosphäre bildende gasförmige Medium abgeschieden wird, und daß in das Gefäß im wesentlichen an der Stelle, an der sich die Oberfläche der Eisengußschmelze befindet, ein gasförmiges oxidierendes Medium eingeblasen wird, und zwar in der Weise, daß die Oxidierung des Zinks herbeigeführt wird, sobald die Dämpfe aus dem Bad entweichen.

7. Anlage, weiche Einrichtungen zur Durchführung des Verfahrens nach einem der Ansprüche 1 bis 6 und insbesondere Einrichtungen (8) zum Einschließen und Auffangen (11, 12) des Zinks, und eine Einrichtung (9) zum Aufbauen eines Teilvakuums aufweist, deren Höhe in der eingeschlossenen Atmosphäre mittels Beaufschlagung durch eine Einrichtung (9a) zum Abscheiden des in dem umschlosssenen Raum vorhandenen gasförmigen Mediums steuerbar veränderlich ist,
**dadurch gekennzeichnet**, daß sie zur Einstellung der Höhe des Vakuums auf einen in Abhängigkeit von der Entwicklung des Sättigungsdampfdrucks des in der Eisengußschmelze bei Schmelzentemperatur gelösten Zinks über die Zeit vorgegebenen Wert eine Einrichtung (9b) zum Steuern der Abscheideeinrichtung (9a) aufweist, wobei der vorgegebene Wert zumindest geringfügig über diesem Sättigungsdampfdruck liegt.

8. Anlage mit Einrichtungen nach Anspruch 7 und insbesondere mit einer Einrichtung (11, 12) zum Auffangen des aus der Schmelze abgeschiedenen Zinks, **dadurch gekennzeichnet**, daß die Auffangeinrichtung (12) aus einer Einrichtung zum Oxidieren des Zinks an der Stelle besteht, an der sich die Oberfläche (6) der Eisengußschmelze befindet.

9. Anlage nach Anspruch 8, **dadurch gekennzeichnet**, daß die Einrichtung (11, 12) zum Auffangen folgendes aufweist:
- eine starre Platte (16) mit einer Oberfläche (17), die im wesentlichen eben ist und deren Größe in etwa gleich der Ausdehnung der Schmelzenoberfläche ist,
- ein Halteorgan (13), das die Platte sowohl in geringem Abstand über der Schmelzenoberfläche als auch auf einer Temperatur hält, die höher ist als die Verdampfungstemperatur des Zinks bei dem gesteuerten Druck,
eine Leitung (13a), weiche ein gasförmiges oxidierendes Medium weiterleitet, wobei die Leitung durch die Platte (16) an der Stelle mündet, an der sich die Oberfläche (6) der Schmelze befindet,
- eine Einrichtung (13b) zum Einblasen des gasförmigen Mediums in die vorgenannte Leitung (13a).
